# EUROPÄISCHE PATENTSCHRIFT

(11) **EP 3 519 708 B1**
(45) Veröffentlichungstag und Bekanntmachung des Hinweises auf die Patenterteilung: **21.10.2020**
(21) Anmeldenummer: 17787337.9
(22) Anmeldetag: 27.09.2017
(51) Int. Cl.: F16B 39/30, B21K 1/70

(54) **SICHERUNGSINNENGEWINDEELEMENT, GEWINDEVERBINDUNG SOWIE HERSTELLVERFAHREN UND WERKZEUG**
INTERNALLY THREADED LOCKING ELEMENT, THREADED CONNECTION AND PRODUCTION METHOD AND TOOL
ELÉMENT À FILETAGE INTÉRIEUR DE FIXATION, RACCORD FILETÉ AINSI QUE PROCÉDÉ DE PRODUCTION ET OUTIL

(30) Priorität: 27.09.2016 DE 102016118255
(43) Veröffentlichungstag der Anmeldung: 07.08.2019
(73) Patentinhaber: Flaig, Hartmut, 78554 Aldingen (DE)
(72) Erfinder: Flaig, Hartmut, 78554 Aldingen (DE)
(74) Vertreter: Patentanwälte Behrmann Wagner PartG mbB
(86) Internationale Anmeldenummer: PCT/EP2017/074522
(87) Internationale Veröffentlichungsnummer: WO 2018/060264

(56) Entgegenhaltungen:
- DE-A1-102015 000 236
- DE-A1-102015 000 236
- GB-A- 1 146 635
- GB-A- 1 146 635
- US-A- 3 444 916
- US-A- 3 444 916
- US-A- 3 747 656
- US-A- 3 747 656

## Beschreibung

Die Erfindung betrifft ein Sicherungsinnengewindeelement aus Metall gemäß dem Oberbegriff des Anspruchs 1, insbesondere eine Mutter, zum Herstellen einer (Sicherungs-)Gewindeverbindung mit einem Außengewindeelement durch Verdrehen des Sicherungsgewindeelementes in eine Aufschraubrotationsrichtung relativ zu dem Außengewindeelement und dadurch Verstellen des Sicherungsinnengewindeelementes in eine axiale Vorschubrichtung relativ zu dem Außengewindeelement und/oder durch Verdrehen des Außengewindeelementes relativ zu dem Sicherungsinnengewindeelement und dadurch Verstellen des Außengewindeelementes entgegen der axialen Vorschubrichtung des Sicherungsgewindeelementes relativ zu dem Sicherungsinnengewindeelement, mit einem, bevorzugt monolithischen, bevorzugt kaltfließgepressten Metall-Körper mit Innengewinde mit mindestens einer von zwei Gewindezahnwindungen begrenzten Sicherungs(innen)gewindegangwindungen, deren Querschnittsprofil im Vergleich zu dem Querschnittsprofil mindestens einer weiteren Gewindegangwindung des Innengewindes, vorzugsweise im Vergleich zu mehreren weiteren Gewindegangwindungen, bevorzugt im Vergleich zu der überwiegenden Anzahl von Gewindegangwindungen des Innengewindes zum Erhöhen des Kraftschlusses einer das Sicherungsinnengewindeelement aufweisenden Gewindeverbindung verformt (deformiert) ist.

Ferner betrifft die Erfindung eine Gewindeverbindung gemäß Anspruch 7 sowie ein Verfahren zum Herstellen eines Sicherungsinnengewindeelementes auf Basis eines, insbesondere kaltfließgepressten, Innengewindelementrohlings gemäß Anspruch 8 und ein für ein solches Verfahren einsetzbares (Deformier-)Werkzeug gemäß Anspruch 12.

Aus dem Stand der Technik ist es zur Vermeidung eines unbeabsichtigten Lösens einer Gewindeverbindung, beispielsweise im Betrieb einer die Gewindeverbindung aufweisenden Vorrichtung bekannt, durch Deformation von Gewindezahnwindungen des Außengewindeelementes beim Verschrauben von Außengewindeelement und Innengewindeelement zur Herstellung der Gewindeverbindung ein Bremsmoment zu erzeugen. Ein entsprechendes, deformiertes Außengewindeelement ist beispielsweise in der WO 2010/099947 A1 beschrieben. Die Deformation einiger Gewindezahnwindungen des bekannten Außengewindeelementes wurde durch entsprechende von radial außen nach radial innen auf das Gewinde wirkenden Stempel erzeugt, indem mithilfe der Stempel Gewindezahnwindungen in einer axialen Einschraubrichtung des Außengewindeelementes parallel verschoben wurden. Bis zu dieser früheren Erfindung wurden Gewindezahnwindungen nicht parallel verschoben sondern irgendwie deformiert, und zwar in der Regel entgegen der axialen Einschraub-, d.h. Vorschubrichtung des Außengewindeelementes, wodurch bei bis dato bekannten Lösungen eine etwaige resultierende Bremswirkung nicht dauerhaft war bzw. entsprechend definierte Außengewinde nicht mehrfach unter Erzielung einer Bremswirkung verwendet werden konnten. Teilweise wurde die Bremswirkung sogar beim Verschrauben mit einem Innengewindeelement vollständig aufgehoben.

Bei anderen bekannten Ansätzen wurde versucht, das Bremsmoment durch entsprechende Ausgestaltung des Innengewindelementes, also mittels einer Sicherungsmutter zu erzeugen.

Hierzu wurde in der DE 10 2005 050 919 A1 vorgeschlagen, Sicherungsgewindegangwindungen durch einen Aufspreizvorgang zu erzeugen, bei dem die die spätere Sicherungsgewindegangwindung begrenzenden Gewindezahnwindungen ineinander entgegengesetzte Richtungen deformiert wurden.

Ein anderer Ansatz wurde bei der in der EP 2 224 143 A1 beschriebenen Lösung verfolgt - hier wurde durch axiales Einschlagen eines Mehrkantprofils in ein Innengewindeelement Material von Gewindezahnwindungen in jeweils benachbarte (Sicherungs-)Gewindegangwindungen verdrängt.

Aus der US 1,416,087 ist es bekannt einen Gewindesprung zwischen zwei Innengewindeabschnitten durch axiales Aufeinanderzuverstellen der Innengewindeabschnitte zu erzeugen.

Aus der US 2013/0236266 A 1 ist eine Sicherungsmutter mit ausgewölbten Gewindezahnwindungen bekannt, ebenso aus der DE 41 32 923 A1.

Bei der aus der WO 2010/086110 A1 ist es bekannt, zwei axial beabstandete Innengewindeabschnitte zur Erzeugung des Bremsmomentes relativ zueinander zu verstellen.

Außerdem ist aus der GB 1 146 635 A eine Sicherungsmutter bekannt, bei der durch eine rückwärtige, radial abschnittsweise Verformung eine entsprechend abschnittsweise Verformung oder Ablenkung in die in Vorschubrichtung letzten Sicherungsgewindegangwindungen und Gewindezahnwindungen eingebracht werden, wobei die jeweiligen Verformungen von aufeinander folgenden Gewindegangwindungen und Gewindezahnwindungen mit zunehmendem Abstand von der verformten rückwärtigen Oberfläche abnehmen.

Die US 3 444 961 A lehrt weiter eine Sicherungsmutter, bei der einzelne Flanken oder Flankenabschnitte von Gewindezahnwindungen mittels eines Werkzeugs bearbeitet und verformt werden, so dass die Gewindezahnwindungen mit den bearbeiteten Flanken eine asymmetrische Verformung aufweisen, bei der die aneinander angrenzenden Flanken einer Gewindezahnwindung in axialer Richtung unterschiedliche Steigungen aufweisen.

Die US 3 747 656 A offenbart zudem eine Sicherungsmutter, bei der eine äußerste Flanke einer Gewindezahnwindung abschnittsweise Verformungen aufwiest.

Der DE 10 2015 000 236 A1 kann zudem eine Ganzmetall-Sicherungsmutter entnommen werden, die zwei gegeneinander geformte Gewindehälften aufweist.

Ausgehend von dem vorgenannten Stand der Technik liegt der Erfindung die Aufgabe zugrunde, ein verbessertes Sicherungsinnengewindeelement bereitzustellen, welches auch nach mehrmaligem Lösen einer das Sicherungsinnengewindeelement umfassenden Gewindeverbindung die Bereitstellung eines Bremsmomentes gegen ein unbeabsichtigtes Lösen sicherstellt. Ferner besteht die Aufgabe darin, ein optimiertes Verfahren zum Herstellen eines solchen Sicherungsinnengewindeelementes und ein zur Ausführung eines solches Verfahrens geeignetes Deformierwerkzeug anzugeben.

Zudem besteht die Aufgabe darin, eine mit einem erfindungsgemäßen Sicherungsinnengewindeelement hergestellte Gewindeverbindung anzugeben, die auch nach mehrmaligen Lösen des Sicherungsinnengewindeelementes eine Bremswirkung zur Sicherung gegen unbeabsichtigtes Lösen bereitstellt.

Diese Aufgabe wird hinsichtlich des Sicherungsinnengewindeelementes mit den Merkmalen des Anspruchs 1 gelöst, d.h. bei einem gattungsgemäßen Sicherungsinnengewindeelement aus Metall, insbesondere einer Innengewindemutter, bevorzugt dadurch, dass ausschließlich eine der die mindestens eine Sicherungsgewindegangwindung begrenzenden Gewindezahnwindungen oder beide die Sicherungsgewindegangwindung auf zwei Axialseiten begrenzenden Sicherungsgewindezahnwindungen, jeweils über ihre gesamte (d.h. eine volle) Umfangserstreckung (360°), derart deformiert ist bzw. sind, dass diese ausschließlich - radialabschnittsweise, d.h. nur über einen radial inneren Abschnitt oder vollständig, d.h. über ihre gesamte Radialersteckung - in die axiale Vorschubrichtung des Sicherungsgewindeelementes relativ zu einem radial benachbarten (nicht deformierten) Bereich des Körpers verschoben ist/sind. Für den bevorzugten Fall, dass ein erfindungsgemäßes Sicherungsinnengewindeelement mehrere Sicherungsgewindegangwindungen aufweist, können bezogen auf das Sicherungsinnengewindeelement selbstverständlich beide Fälle auftreten, dass nämlich nur eine der eine der Sicherungsgewindegangwindungen begrenzenden Gewindezahnwindungen, insbesondere die in der axialen Vorschubrichtung hintere der Gewindezahnwindungen in der axialen Vorschubrichtung durch Parallelverschieben relativ zu einem benachbarten Bereich (nicht deformiert) des Körpers parallel verschoben ist und dass bei einer weiteren der Sicherungsgewindegangwindungen beide die Sicherungsgewindegangwindung in axialer Richtung begrenzenden Gewindezahnwindungen in der axialen Vorschubrichtung des Sicherungsinnengewindeelementes parallel verschoben sind.

Dabei ist es bevorzugt, wenn die Gewindezahnwindungen des Sicherungsinnengewindeelementes fortlaufend sind, d.h. nicht axial beabstandet sind, sondern dass die mindestens eine parallelverschobene Gewindezahnwindung in Umfangsrichtung in eine nicht deformierte Gewindezahnwindung übergeht.

Hinsichtlich der Gewindeverbindung wird die Aufgabe mit den Merkmalen des Anspruchs 8 und hinsichtlich des Verfahrens zur Herstellung des Sicherungsinnengewindeelementes mit den Merkmalen des Anspruchs 9 gelöst.

Hinsichtlich des Deformierwerkzeugs zur Durchführung des Verfahrens wird die Aufgabe mit den Merkmalen des Anspruchs 12 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale auch als vorrichtungsgemäß offenbart gelten und beanspruchbar sein.

Der Erfindung liegt zunächst der Gedanke zugrunde, die mindestens einen eine Sicherungsgewindegangwindung (vorzugsweise von mehreren Sicherungsgewindegangwindungen) begrenzende Gewindezahnwindung ausschließlich in eine axiale Richtung, und zwar die eingangs definierte axiale Vorschubrichtung des Sicherungsgewindeinnenelementes bei einem gedachten Verschrauben des Sicherungsinnengewindeelementes mit einem korrespondierenden Außengewindeelement zu deformieren. Anders ausgedrückt wird die mindestens eine Gewindezahnwindung entgegen einer Zugbelastungsrichtung des Sicherungsgewindeelementes in einer späteren Gewindeverbindung deformiert, also beispielsweise in eine Richtung hin zu einem fakultativen Schraubenkopf des Außengewindeelementes der Gewindeverbindung. Dabei ist es möglich, dass eine, von vorzugsweise mehreren, Sicherungsgewindegangwindungen von nur einer in der axialen Vorschubrichtung über ihre gesamte Umfangserstreckung, parallel verschobenen Gewindezahnwindung begrenzt ist, wobei die weitere diese Sicherungsgewindegangwindung begrenzende Gewindezahnwindung dann nicht deformiert ist. Zusätzlich oder alternativ kann das erfindungsgemäße Sicherungsinnengewindeelement eine Sicherungsgewindegangwindung umfassen, bei der beide die Sicherungsgewindegangwindung in die beiden Axialrichtungen begrenzenden Gewindezahnwindungen jeweils über ihre gesamte Umfangserstreckung, in der axialen Vorschubrichtung parallel verschoben sind. Bevorzugt ist eine Ausführungsform, bei der das Sicherungsinnengewindeelement keine entgegen der axialen Vorschubrichtung deformierte Gewindezahnwindung aufweist. Für den weniger bevorzugter Fall, dass zusätzlich zu in der axialen Vorschubrichtung jeweils über ihre gesamte Umfangserstreckung, parallel verschobene Gewindezahnwindungen entgegen der axialen Vorschubrichtung deformierte Gewindezahnwindungen vorgesehen sein sollten ist es bevorzugt, wenn die Anzahl der entgegen der axialen Vorschubrichtung deformierten Gewindezahnwindungen geringer ist als die Anzahl der in der axialen Vorschubrichtung parallel verschobenen Gewindezahnwindungen und/oder dass die Länge (Windungslänge) der in der axialen Vorschubrichtung parallel verschobenen Gewindezahnwindungsabschnitte größer ist als die Windungslänge der in die entgegengesetzte Richtung deformierten Gewindezahnwindungsabschnitte.

Die Erfindung hat nämlich erkannt, dass eine Deformation einer Gewindezahnwindung bei einem Innengewindeelement in beide Axialrichtungen und damit auch entgegen der axialen Vorschubrichtung oder ausschließlich entgegen der axialen Vorschubrichtung nachteilig ist, da die entgegen der axialen Vorschubrichtung orientierte Deformationsrichtung der Sicherungswirkung beim Verschrauben des Sicherungsinnengewindeelementes mit einem Außengewinde entgegenwirkt, im Extremfall sogar derart, dass die Sicherungsfunktion aufgehoben wird, wenn das Sicherungsgewindeelement wie üblich belastet wird.

Erfindungswesentlich ist zudem, dass die mindestens eine Gewindezahnwindung nicht irgendwie in der axialen Vorschubrichtung deformiert ist, sondern wie bereits angedeutet in diese axiale Vorschubrichtung parallel verschoben ist, wobei bevorzugt das Parallelverschieben durch Materialumformen relativ zu dem jeweils radial außen benachbarten, gleichbleibenden, d.h. nicht deformierten Bereich des Körpers erfolgt bzw. erfolgt ist; wesentlich ist also, dass nicht zwei gesamte Axialabschnitte des Sicherungsinnengewindeelementes bzw. des Körpers zueinander relativ verstellt werden, sondern tatsächlich nur eine Deformation durch Parallelverschieben der mindestens einen Gewindezahnwindung als solches erfolgt. Parallelverschieben bedeutet dabei, dass sich der Winkel einer in der axialen Vorschubrichtung parallel verschobene Gewindeflanke der deformierten Gewindezahnwindung zu einer Radialen durch den Verschiebeprozess nicht ändert, also nach dem Verschieben gleich ist oder zumindest näherungsweise gleich ist wie vor dem Parallelverschieben.

Im Rahmen der vorliegenden Offenbarung wird unter einer Gewindegangwindung eine sich um eine Längsmittelachse des Innengewindes wendelnde Rille zwischen zwei Gewindezahnwindungen verstanden, welche sich bezogen auf einen radial äußeren Rillengrund in radialer Richtung nach innen erstrecken. Folglich handelt es sich bei einer Sicherungsgewindegangwindung um eine derartig gewendelte Rille, die von mindestens einem in der axialen Vorschubrichtung parallel verschobenen Gewindezahnwindung, oder von zwei solcher parallel verschobener Gewindezahnwindungen begrenzt ist. Eine Windung, unabhängig davon ob es sich um eine Gewindegangwindung oder eine Gewindezahnwindung handelt erstreckt sich über einen Umfangswinkel von 360°.

Unter einem Parallelverschieben einer Gewindezahnwindung wird verstanden, dass deren Flankenwinkel zwischen der entgegen der axialen Vorschubrichtung orientierten Flanke und einer Radialebene und/oder zwischen der in der axialen Vorschubrichtung orientierten Flanke und einer Radialebene zumindest näherungsweise, bevorzugt genau einem entsprechenden Flankenwinkel einer nicht deformierten Gewindezahnwindung, also insbesondere einer Norm-Gewindezahnwindung des Sicherungsinnengewindeelementes entspricht. Anders ausgedrückt, wird unter einem axialen Parallelverschieben verstanden, dass die in der axialen Vorschubrichtung orientierte Flanke und/oder die entgegen der axialen Vorschubrichtung orientierte Flanke der Gewindezahnwindung unter Beibehaltung ihres jeweiligen ursprünglichen Flankenwinkels in der axialen Vorschubrichtung durch Materialumformung in einem Kontakt bzw. Übergangsbereich zu einem radial benachbarten, nicht zu deformierenden Bereich des Sicherungsinnengewindeelementes verstellt wird. Durch das Parallelverschieben wird zwischen den nicht deformierten Gewindezahnwindungen und der mindestens einen deformierten Gewindezahnwindung ein Gewindesteigungssprung (Steigungsversatz) realisiert.

Bei einer bevorzugten, nur abschnittsweisen Parallelverschiebung der mindestens einen Gewindezahnwindung ist es bevorzugt, wenn ein radial innerer Flankenabschnitt der entgegen der axialen Vorschubrichtung orientierten Flanke der deformierten Gewindezahnwindung gegenüber einer Radialen den gleichen Flankenwinkel einschließt wie ein radial weiter außenliegender Flankenabschnitt des nicht parallel verschobenen Abschnitts der deformierten Gewindezahnwindung. Bevorzugt gilt dies analog auch für die in Richtung der axialen Vorschubrichtung orientierte Flanke der deformierten Gewindezahnwindung, d.h. bevorzugt schließen der radial innenliegende Flankenabschnitt dieser Flanke, also der parallel verschobene Radialabschnitt der Gewindezahnwindung mit einer zugeordneten Radialen den gleichen Flankenwinkel ein wie ein radial weiter außenliegender Flankenabschnitt des nicht parallel verschobenen Abschnitts der deformierten Gewindezahnwindung mit einer entsprechenden Radialen.

Zur Maximierung der Bremswirkung ist die deformierte Gewindezahnwindung erfindungsgemäß, zumindest näherungsweise, über ihre vollständige Umfangserstreckung in der Vorschubrichtung parallel zu verschieben, vorzugsweise indem der Bereich einer radial inneren Gewindezahnwindungsspitze in die der axialen Vorschubrichtung benachbarte (Sicherungs-) Gewindegangwindung hinein verdrängt, d.h. in diese hinein, insbesondere unter Beibehaltung der Formgebung des Radialabschnittes umgeformt wird, um das Querschnittsprofil der Sicherungsgewindeganzwindung zu verändern, insbesondere zu verengen.

Das erfindungsgemäße Sicherungsinnengewindeelement aus Metall kann mehrfach mit einem Außengewindeelement zur Herstellung einer Gewindeverbindung verwendet werden - die Bremswirkung bleibt aufgrund der erfindungsgemäßen Deformation durch Parallelverschieben (durch Materialumformen in einem Kontaktbereich des zu verschiebenden Bereichs zu einem nicht zu deformierten Bereich) mindestens einer der Gewindezahnwindungen in der axialen Vorschubrichtung erhalten. Durch die erfindungsgemäße Deformation mindestens einer Gewindezahnwindung, vorzugsweise mehrerer, insbesondere axial endseitiger Gewindezahnwindungen durch Parallelverschieben in die axiale Vorschubrichtung wird das Gewindespiel einer erfindungsgemäßes Sicherungsinnengewindeelementes aufweisenden Gewindeverbindung bis auf null reduziert, insbesondere bei gleichzeitiger elastischer, vorzugsweise nicht plastischer, Deformation der mindestens einen erfindungsgemäß durch Parallelverschieben deformierten Gewindezahnwindung entgegen der axialen Vorschubrichtung.

Ganz besonders bevorzugt ist es, wenn das Sicherungsinnengewindeelement einen Antrieb, insbesondere in Form von mehreren Umfangsrichtung nebeneinander angeordneten parallelen Schlüsselflächenpaaren am Außenumfang aufweist und/oder einen in der axialen Vorschubrichtung vorne gelegenen Ringkragen zum Abstützen bzw. zur Auflage an einer Abstützfläche im Rahmen einer Gewindeverbindung aufweist.

Besonders bevorzugt ist eine Ausführungsform des Sicherungsinnengewindeelementes, bei der zumindest eine bezogen auf die axiale Vorschubrichtung letzte Gewindezahnwindung, bevorzugt zumindest die letzten zwei oder zumindest die letzten drei Gewindezahnwindungen in der axialen Vorschubrichtung parallel verschoben sind. Unter einer letzten Gewindezahnwindung wird dabei bevorzugt eine letzte volle Gewindezahnwindung verstanden, also eine Gewindezahnwindung mit einer vollen Radialerstreckung, d.h. nicht ein sich in radialer Richtung nach außen abflachender Auslaufbereich einer Gewindezahnwindung. Anders ausgedrückt ist es bevorzugt, dass bei einem Sicherungsinnengewindeelement eine axial endseitige volle Gewindezahnwindung in der axialen Vorschubrichtung deformiert ist, so dass ein Außengewindeelement erst am Ende eines Verschraubungsschrittes mit einem erfindungsgemäßen Sicherungsinnengewindeelement mit der mindestens einen, vorzugsweise den mehreren axial endseitigen in der Axialvorschubrichtung durch Parallelverschieben deformierten Gewindezahnwindungen reibschlüssig in Kontakt kommt.

Besonders zweckmäßig ist eine Ausführungsform, bei der die mindestens eine Sicherungsgewindegangwindung in Umfangsrichtung unmittelbar in eine der nicht deformierten Gewindegangwindungen übergeht und/oder dass mindestens eine durch Parallelverschieben in der axialen Vorschubrichtung deformierte Gewindezahnwindung in Umfangsrichtung in eine nicht deformierte Gewindezahnwindung übergeht.

In Weiterbildung der Erfindung ist mit Vorteil vorgesehen, dass mindestens zwei Sicherungsgewindegangwindungen, insbesondere die bezogen auf die axiale Vorschubrichtung mindestens zwei letzten, bevorzugt vollen, d.h. eine volle Radialerstreckung aufweisenden, Gewindegangwindungen unmittelbar axial benachbart sind und/oder in Umfangsrichtung ineinander übergehen.

Bevorzugt wird das Parallelverschieben der mindestens einen, mindestens eine Sicherungsgewindegangwindung begrenzenden Gewindezahnwindung so durchgeführt, dass dabei die Summe von deren beiden Flankenwinkeln vor, während und nach dem Verschieben zumindest näherungsweise gleich bleibt.

Als besonders bevorzugt hat es sich herausgestellt, wenn die parallel verschobene Gewindezahnwindung radial durchgehend oder bei nur abschnittsweise Parallelverschiebung nur in einem radial inneren Bereich um ein senkrecht zur Flächenerstreckung der in der axialen Vorschubrichtung orientierten Gewindeflanke und/oder der entgegen der axialen Vorschubrichtung orientierten Gewindeflanke der deformierten Gewindezahnwindung gemessenes Maß zwischen 0,05 mm und 0,6 mm, vorzugsweise zwischen 0,1 mm und 0,5 mm, besonders bevorzugt zwischen 0,2 mm und 0,4 mm, ganz besonders bevorzugt von 0,3 mm bezogen auf eine Ursprungslage relativ zu einem unmittelbar benachbarten radialen (nicht deformierten bzw. parallel verschobenen) Bereich des Körpers versetzt ist. Bei einer nur abschnittsweisen Parallelverschiebung der mindestens einen Gewindezahnwindung entspricht das vorgenannte Maß bevorzugt dem Abschnitt eines radial äußeren Flankenabschnitts und eines radial inneren Flankenabschnitts, der in Richtung der axialen Vorschubrichtung orientierten Flanke und/oder der entgegen der axialen Vorschubrichtung orientierten Flanke, jeweils gemessen senkrecht zur jeweiligen Flanke bzw. Flankenabschnittsflächenerstreckung.

Wie eingangs bereits angedeutet ist es grundsätzlich möglich, dass die mindestens eine relativ zu einem nicht deformierten, radial benachbarten Körperabschnitt in die axiale Vorschubrichtung parallel verschobene Gewindezahnwindung über ihre gesamte Radialerstreckung, d.h. insbesondere vom radial äußeren Fuß einer Flanke der Gewindezahnwindung bis zu nach radial innen weisenden Spitze axial parallel verschoben ist, d.h. die entgegen der axialen Vorschubrichtung orientierte Gewindeflanke der deformierten Gewindezahnwindung ist vollständig, d.h. zumindest näherungsweise vom Grund weg axial in der axialen Vorschubrichtung parallel verschoben. Bei einer alternativen Ausführung ist es zur Gewährleistung eines elastischen Verhaltens der mindestens einen deformierten Gewindezahnwindung bevorzugt diese nur in einem radial inneren Teilabschnitt, insbesondere mit einer Radialerstreckung zwischen 20 % und 80 % der gesamten Radialerstreckung der Gewindezahnwindung in der axialen Vorschubrichtung parallel zu verschieben, so dass sich eine Stufung der entgegen der axialen Vorschubrichtung orientierten Flanke der deformierten Gewindezahnwindung ergibt, vorzugsweise aufweisend gerundete Übergänge zwischen den radial benachbarten Stufenabschnitten. Die Stufung bzw. das nur partielle Parallelverschieben kann dadurch erreicht werden, dass ein entsprechendes Deformierwerkzeug einen Deformierabschnitt aufweist, der in radialer Richtung nicht bis zu einem Gewindegangwindungsgrund reicht, sondern eine geringere Radialerstreckung aufweist, so dass nur ein radial innerer Abschnitt der gewünschten Gewindezahnwindungen in der axialen Vorschubrichtung deformiert wird. Bevorzugt hat die entgegen der axialen Vorschubrichtung orientierte Flanke im Falle der nur abschnittsweisen Parallelverschiebung die Form einer mathematischen Funktion mit Sattelpunkt, insbesondere zumindest näherungsweise die Form einer Funktion f(x) = x³.

Ganz besonders bevorzugt ist es, wenn die nicht deformierten Gewindegangwindungen als Regel- bzw. Normgewinde ausgebildet sind, insbesondere als norm-metrisches Gewinde, insbesondere ISO DIN 13 oder als Norm-Zollgewinde, insbesondere als Whitworth-Gewinde. Für den Fall der bezogen auf ihre Radialerstreckung vollständigen Parallelverschiebung der deformierten Gewindegangwindungen ist es bevorzugt, wenn diese, d.h. nach dem Parallelverschieben ebenfalls (noch) als Regel-Normgewinde ausgebildet sind. Für den Fall der nur abschnittsweisen Parallelverschiebung ist es bevorzugt, wenn der parallel verschobene Abschnitt, zumindest in einem radial äußeren Bereich einem entsprechenden Bereich bzw. Abschnitt eines Regel- bzw. Normgewindes, insbesondere eines norm-metrischen Gewindes oder eines Norm-Zollgewindes entspricht.

Die Erfindung führt auch auf eine (Sicherungs-)Gewindeverbindung, umfassend ein nach dem Konzept der Erfindung ausgebildetes Sicherungsinnengewindeelement, welches mit einem korrespondierenden, vorzugsweise ein Regel- bzw. Normaußengewinde aufweisenden Außengewindeelement verschraubt ist, insbesondere derart, dass die Gewindeverbindung kein axiales Spiel aufweist, d.h. dass sowohl die entgegen der axialen Vorschubrichtung orientierten Gewindeflanken der nicht deformierten Gewindezahnwindungen als auch die in der axialen Vorschubrichtung orientierte Gewindeflanke der mindestens einen deformierten Gewindezahnwindung an jeweils einer gegenüberliegenden Gewindezahnflanke des Außengewindeelementes reibschlüssig anliegen und/oder derart, dass die mindestens eine in der axialen Vorschubrichtung parallel verschobene Gewindezahnwindung des Innengewindeelementes entgegen der axialen Vorschubrichtung elastisch, bevorzugt nicht plastisch, deformiert ist.

Darüber hinaus führt die Erfindung auf ein Verfahren zum Herstellen eines erfindungsgemäßen Sicherungsinnengewindeelementes. Kern des Verfahrens ist es, dass zunächst ein, vorzugsweise gehärteter und/oder monolithischer Innengewindeelementrohling mit einem in einem Körper angeordneten regelmäßigen Innengewinde bereitgestellt wird und die mindestens eine Sicherungsgewindegangwindung (nach dem Herstellungsverfahren) begrenzende Gewindezahnwindung über ihre gesamte Umfangserstreckung, entweder nur über ihren Teil ihrer Radialerstreckung oder über ihre gesamte Radialerstreckung in die axiale Vorschubrichtung relativ zu einem jeweils radial benachbarten Bereich des Körpers parallel verschoben wird.

Dabei ist es bevorzugt, wenn das Deformieren durch axiales Kraftbeaufschlagen der mindestens einen parallel zu verschiebenden Gewindezahnwindung, vorzugsweise während einer drehenden Relativbewegung zwischen dem Innengewindeelementrohling und einem Deformierwerkzeug durchgeführt wird.

Diese zeichnet sich durch einen in der axialen Vorschubrichtung des Deformierwerkzeugs vorderen, insbesondere als Regelaußengewindeabschnitt ausgebildeten Außengewindeabschnitt aus, an den entgegen der axialen Vorschubrichtung ein Zwischenabschnitt anschließt, an den wiederum ein Deformier(außengewinde)abschnitt anschließt, der bzw. dessen Außengewinde gegenüber dem Außengewinde des vorderen, bevorzugt als Regelaußengewindeabschnitt ausgebildeten Außengewindeabschnitt einen axialen Steigungsversatz (Steigungssprung) aufweist. Das Deformierwerkzeug wird nun mit seinem vorderen Außengewindeabschnitt in das zunächst noch axial durchgehend nicht deformierte regelmäßige Innengewinde, vorzugsweise ein Norm-Innengewinde des Innengewindeelementrohlings in der axialen Vorschubrichtung des Deformierwerkzeugs eingeschraubt und dann weiter, bis der Deformierabschnitt die gewünschte Anzahl an axial endseitigen, insbesondere vollen Gewindezahnwindungen radial durchgehend oder radialabschnittsweise in der axialen Vorschubrichtung des Deformierwerkzeugs, die der axialen Vorschubrichtung des fertigen Sicherungsinnengewindeelementes relativ zu einem Außengewindeelement zum Herstellen einer Gewindeverbindung entspricht parallel verschoben werden. Der Zwischenabschnitt des Deformierwerkzeugs zeichnet sich bevorzugt dadurch aus, dass dieser nicht in kontaktierende Wechselwirkung mit dem Innengewinde des Innengewindeelementrohlings tritt - zu diesem Zweck kann der Zwischenabschnitt außengewindefrei und/oder durchmesserreduziert ausgebildet sein im Vergleich zu dem vorderen Außengewindeabschnitt und/oder dem Deformiergewindeabschnitt. Besonders zweckmäßig ist es, wenn der Deformieraußengewindeabschnitt eine geringere Radialerstreckung aufweist, als der vordere Außengewindeabschnitt - bevorzugt fehlen entsprechende radial äußere Außengewindespitzen, um eine nur partielle bzw. radial innere Parallelverschiebung der zu deformierenden Gewindezahnwindungen zu ermöglichen.

Der Zwischenabschnitt weist bevorzugt eine Axialerstreckung auf, die mindestens der axialen Länge der deformierten Gewindezahngänge entspricht und bevorzugt länger ist als diese axiale Länge, also so bemessen ist, dass sichergestellt ist, dass der Deformieraußengewindeabschnitt beim Herausdrehen des Deformierwerkzeugs aus dem Sicherungsinnengewindeelement nicht mehr in Eingriff ist mit dessen Innengewinde, wenn das Außengewinde des vorderen, bevorzugt als Regelaußengewindeabschnitt ausgebildeten Außengewindeabschnitts in Eingriff mit den zuvor parallel verschobenen Gewindezahnwindungen kommt. Bevorzugt ist der vordere Außengewindeabschnitt axial länger als die axiale Länge der zu deformierenden Gewindezahnwindungen und/oder die axiale Länge des Deformieraußengewindeabschnitts.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1 bis 3:: unterschiedliche, teilweise geschnittene oder detailvergrößerte Ansichten einer bevorzugten Ausführungsform eines nach dem Konzept der Erfindung ausgebildeten Sicherungsgewindeelementes,
- Fig. 4 bis 6:: unterschiedliche, teilweise geschnittene oder detailvergrößerte Ansichten einer bevorzugten Ausführungsform einer nach dem Konzept der Erfindung ausgebildeten Gewindeverbindung, umfassend das in den Fig. 1 bis 3 im Detail gezeigte Sicherungsgewindeelement,
- Fig. 7 bis 9:: unterschiedliche Ansichten eines bereits zu einem Sicherungsinnengewindeelement deformierten Innengewindeelementrohlings samt Deformierwerkzeug.

In den Figuren sind gleiche Elemente und Elemente mit der gleichen Funktion mit den gleichen Bezugszeichen gekennzeichnet.

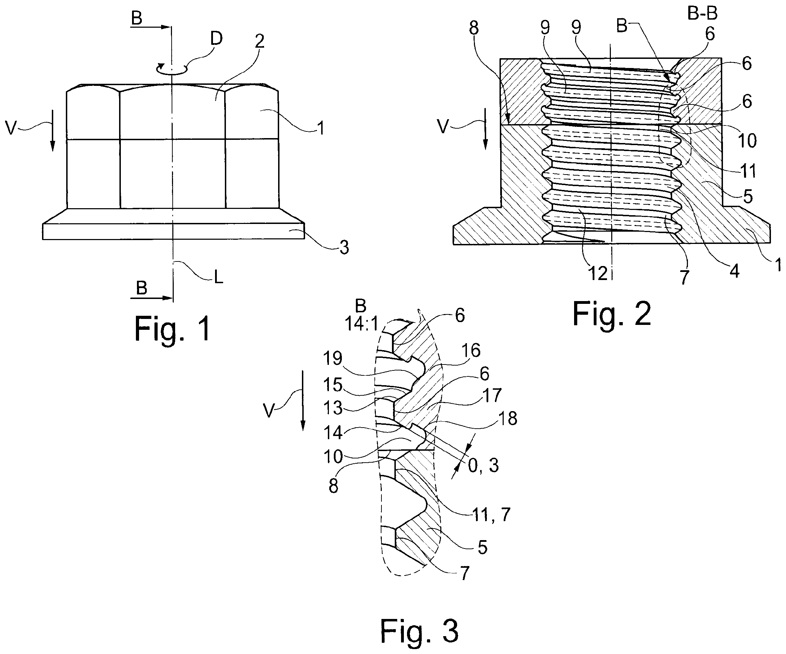

In den Fig. 1 bis 3 ist ein Sicherungsinnengewindeelement 1 gezeigt. Dieses umfasst eine Mehrzahl von in Umfangsrichtung versetzt angeordneten, parallelen Schlüsselflächenpaaren als Antrieb 2 sowie einen in einer axialen Vorschubrichtung V vorderen Ringkragen 3, der radial über den Antrieb 2 vorsteht, um sich an einem Bauteil abzustützen. Das Sicherungsinnengewindeelement 1 ist grundsätzlich auch ohne diesen Ringkragen 3 und/oder den Antrieb realisierbar. Vorliegend weist das Sicherungsinnengewindeelement 1 ein axial durchgehendes Innengewinde 4 auf, welches als Rechtsgewinde ausgeführt wird. Hieraus ergibt sich die axiale Vorschubrichtung V beim Verdrehen in der Aufschraubrotationsrichtung D um eine Längsmittelachse L, also vorliegend bei einem Verdrehen im Uhrzeigersinn.

Das Sicherungsgewindeelement 1 umfasst einen monolithischen, bevorzugt durch Kaltfließpressen hergestellten Körper 5 aus Metall. In der Darstellung gemäß den Figuren könnte der Eindruck erweckt werden, es handelt sich um zwei axial zusammengesetzte Metallabschnitte - dem ist nicht der Fall. Die unterschiedliche Schraffur wurde lediglich gewählt um zwei Axialabschnitte eines einteiligen bzw. monolithischen, axial durchgehenden Körpers 5 zu kennzeichnen. Dabei sind in der Zeichnungsebene oben deformierte, vorliegend in der axialen Vorschubrichtung V abschnittsweise parallel verschobene Gewindezahnwindungen 6 und in der Zeichnungsebene unten nicht deformierte Gewindezahnwindungen 7 gezeigt. An der Linie 8 bildet sich ein (axialer) Gewindeversatz (Gewindesprung) zwischen den deformierten Gewindezahnwindungen 6 und den nicht deformierten Gewindezahnwindungen 7 aus.

Das Sicherungsgewindeelement 1 umfasst mehrere bezogen auf die axiale Vorschubrichtung V hintere Sicherungsgewindegangwindungen 9, die jeweils axial zwischen zwei parallel verschobenen Gewindezahnwindungen 6 angeordnet sind. Eine in der axialen Vorschubrichtung V vordere Sicherungsgewindegangwindung 10 ist axial aufgenommen zwischen einer parallel verschobenen Gewindezahnwindung 6 und der in der Vorschubrichtung V hintersten nicht deformierten Gewindezahnwindung 11.

Dabei geht die in der Vorschubrichtung V vorderste deformierte Gewindezahnwindung 6 in Umfangsrichtung unmittelbar in die hinterste nicht deformierte Gewindezahnwindung 11 über.

Die nicht deformierten Gewindezahnwindungen 7, 11 in einem in der Vorschubrichtung vorderen Abschnitt des Innengewindes 4 bilden einen Regel- bzw. Norminnengewindeabschnitt 12, hier einen metrischen Gewindeabschnitt aus mit einer Normgewindesteigung. Die deformierten Gewindezahnwindungen 6 weisen auch nach der Deformation durch axiales Parallelverschieben die gleiche Gewindesteigung auf - aufgrund des Axialversatzes in Richtung auf den Norminnengewindeabschnitt 12 zu resultiert jedoch der erwähnte Steigungsversatz.

In Fig. 3 ist ein Ausschnitt B aus Fig. 2 vergrößert dargestellt. Zu erkennen sind einige in der axialen Vorschubrichtung V parallel verschobene Gewindezahnwindungen 6 sowie nicht deformierte Gewindezahnwindungen 7, 11. Zu ersehen ist, dass in dem konkreten Ausführungsbeispiel die parallel verschobenen Gewindezahnwindungen 6 in radialer Richtung nur abschnittsweise parallel verschoben sind, und zwar mit einem radial inneren Abschnitt 13. Dieser ist in axialer Richtung in der Vorschubrichtung V nach vorne gewandert hin zu den nicht deformierten Gewindezahnwindungen 7, 11 unter Beibehaltung der voneinander abgewandten Flankenabschnitten 14, 15 der jeweiligen deformierten Gewindezahnwindung 6. Zu erkennen ist, dass der radial innere Abschnitt 13 durch Materialumformung axial verschoben wurde zu einem radial äußeren Abschnitt 16 der deformierten Gewindezahnwindungen 6 sowie zu einem unmittelbar radial benachbarten Bereich bzw. Nichtgewindebereich 17 des Körpers 5. Aus Fig. 3 ist auch das Maß der axialen Parallelverschiebung zu erkennen. Eingezeichnet ist, dass der in der Vorschubrichtung V orientierte Flankenabschnitt 14 des parallel verschobenen radial inneren Abschnitts 13 um ein Maß von 0,3 mm parallel verschoben ist bezogen auf eine ursprüngliche Position bzw. bezogen auf die verbliebene Position des korrespondierenden Flankenabschnittes 18 des zugehörigen radial äußeren Abschnittes 16 der deformierten Gewindezahnwindung 6, wobei dieses Versatz- bzw. Parallelverschiebemaß gemessen ist zur jeweiligen Flächenerstreckung der Flankenabschnitte 14 bzw. 18. Nicht eingezeichnet, jedoch analog ergibt sich der gleiche Versatz für den entgegen der axialen Vorschubrichtung orientierten Flankenabschnitt 15 gegenüber seiner ursprünglichen Position bzw. gegenüber dem korrespondieren Flankenabschnitt 19 des radial äußeren, nicht parallel verschobenen Abschnitts 16 der deformierten Gewindezahnwindung 6. Aus der Parallelverschiebung ergibt sich, dass die parallel verschobenen, radial inneren Abschnitte 13 weiterhin einen Regelgewindecharakter haben bzw. den radial inneren Abschnitt eines Regelgewindes bilden, welcher lediglich gegenüber seiner ursprünglichen Position durch Materialumformung axial in der Vorschubrichtung V relativ zu einem jeweils unmittelbar radial benachbarten Bereich 17 des Körpers 5 sowie dem radial äußeren, benachbarten Abschnitt 16 der zugehörigen Gewindezahnwindung 6 verschoben wurden.

Durch die nur abschnittsweise Axialverschiebung resultieren Stufen in den beiden Flanken 14, 15 der deformierten Gewindezahnwindungen 6.

Bei einer nicht gezeigten, alternativ realisierbaren Ausführungsvariante sind die deformierten Gewindezahnwindungen 6 nicht wie hier gezeigt nur abschnittsweise sondern über ihre gesamte Radialerstreckung deformiert. Die gezeigte Variante ist jedoch vorteilhafter, da sich die radial inneren Abschnitte 13 leichter elastisch verformen lassen als eine gesamt axial versetzte Gewindezahnwindung 6.

Aus Fig. 2 ist zu erkennen, dass die Anzahl der nicht deformierten Gewindezahnwindungen 7, 11 die Anzahl der deformierten Gewindezahnwindungen 6 übersteigt.

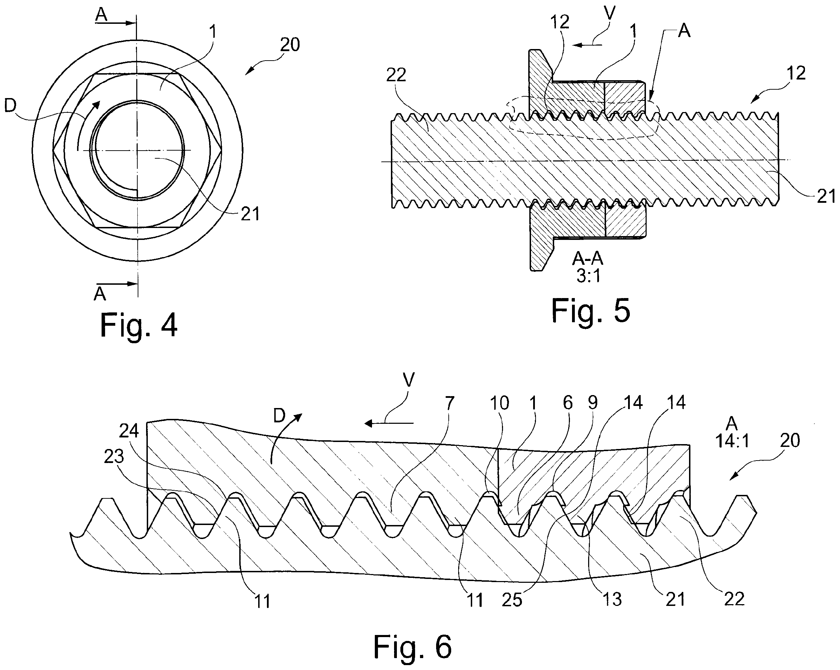

In den Fig. 4 bis 6 ist eine nach dem Konzept der Erfindung ausgebildete Gewindeverbindung 20, umfassend ein Außengewindeelement 21 sowie ein nach dem Konzept der Erfindung ausgebildetes Sicherungsgewindeelement 1 gezeigt.

Das Sicherungsinnengewindeelement 1 wurde durch Verdrehen in der Aufschraubrotationsrichtung D, d.h. hier bei einem Rechtsgewinde im Uhrzeigersinn auf das ein zu dem Normgewindeabschnitt 12 des Sicherungsinnengewindeelementes 1 korrespondierenden Normaußengewinde 22 verschraubt. Dabei liegen entgegen der axialen Vorschubrichtung V orientierte Gewindeflanken 23 der nicht deformierten Gewindezahnwindungen 11 an korrespondierenden bzw. an gegenüberliegenden, d.h. in der axialen Vorschubrichtung V orientierten Gewindezahnflanken 24 des Außengewindes 22 des Außengewindeelementes 21 an. Gleichzeitig stützen sich die deformierten Gewindezähne 6 mit in der axialen Vorschubrichtung V orientierten, parallel verschobenen radial inneren Flankenabschnitten 14 der radial inneren, parallel verschobenen Abschnitte 13 an gegenüberliegenden, entgegen der Vorschubrichtung V deformierten Gewindeflanken 25 des Außengewindes 22 des Außengewindeelementes 21 ab, so dass in der Gewindeverbindung kein Axialspiel mehr herrscht. Aus der reibschlüssigen Anlage resultiert ein Bremsmoment, das gegen ein unbeabsichtigtes Lösen der Gewindeverbindung sichert.

In dem konkreten Ausführungsbeispiel werden die radial inneren Abschnitte 13 der deformierten Gewindezahnwindungen 6 entgegen der Vorschubrichtung V elastisch (federnd) verstellt, so dass das Sicherungsinnengewindeelement 1 axial vorgespannt ist - diese axiale Vorspannung besteht insbesondere zwischen den nicht deformierten Gewindezahnwindungen 11 und den deformierten Gewindezahnwindungen 6, genauer deren radial innerer Abschnitte 13.

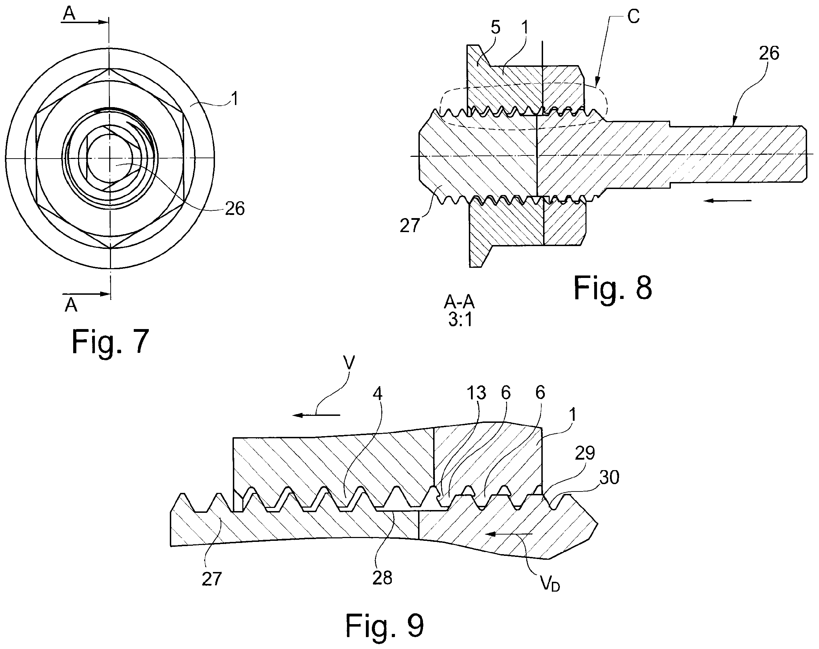

Aus den Fig. 7 bis 9 wird ein bevorzugtes Verfahren zur Herstellung eines erfindungsgemäßen Sicherungsgewindeelementes 1 deutlich. Zwar wird in einen Innengewindeelementrohling, der bereits nahezu dem fertigen Sicherungsgewindeelement 1 entspricht bis auf die parallel verschobenen Gewindezahnwindungen 6. Anders ausgedrückt umfasst der Rohling ein axial durchgehendes Regel- bzw. Normgewinde.

Die erfindungsgemäße Deformation wird erreicht mithilfe eines Deformierwerkzeugs 26, welches in einer axialen Deformierwerkzeugvorschubrichtung V_{D} quasi von hinten bezogen auf die spätere axiale Vorschubrichtung D des Sicherungsgewindeelementes 1 in dieses eingeschraubt wird. Das Deformierwerkzeug 26 umfasst einen in der axialen Vorschubrichtung V_{D} des Deformierwerkzeugs 26 vorderen, hier beispielhaft als Regelaußengewindeabschnitt 27 ausgebildeten Abschnitt (Außengewindeabschnitt), der mit dem Regelinnengewinde des Innengewindeelementrohlings und somit auch mit dem Normgewindeabschnitt 12 des fertigen Sicherungsinnengewindeelementes 1 korrespondiert. Entgegen der Vorschubrichtung V_{D} schließt an den Regelaußengewindeabschnitt 27 ein Zwischenabschnitt 28 an, der in dem gezeigten Ausführungsbeispiel gewindefrei ist und bezogen auf den Außendurchmesser des Regelaußengewindeabschnittes 27 in radialer Richtung nach innen versetzt ist an. Entgegen der Vorschubrichtung V_{D} wiederum schließt an den Zwischenabschnitt 28 ein Deformierabschnitt 29 an. Dieser weist eine geringere Axialerstreckung auf als der Regelaußengewindeabschnitt 27 - im vorliegenden Fall wurde hierfür auf radial äußere Gewindespitzen des ansonsten ebenfalls regelmäßigen Deformieraußengewindes 30 verzichtet. Zwischen dem Deformieraußengewinde 30 und dem Außengewinde des Regelaußengewindeabschnitts 27 existiert ein axialer Steigungsversatz bei ansonsten gleicher Gewindesteigung. Die axiale Länge des Zwischenabschnittes 28 ist so gewählt, dass der Deformierabschnitt 29 außer Eingriff mit dem beim Herausdrehen entgegen der Vorschubrichtung V_{D} außer Eingriff mit dem Innengewinde 4, genauer den deformierten Gewindezahnwindungen 6 des Sicherungsgewindeelementes 1 kommt, bevor der Regelaußengewindeabschnitt 27 bzw. dessen Außengewinde in Eingriff gelangt mit den zuvor mittels des Deformierabschnitts 29 deformierten, d.h. axial in der Vorschubrichtung V des Sicherungsinnengewindeelementes 1 parallel verschobenen Gewindezahnwindungen 6, genauer mit deren radial inneren Abschnitten 13.

Zum Herstellen des Sicherungsgewindeelementes 1 wird also das Deformierwerkzeug 26 von hinten bezogen auf die spätere axiale Vorschubrichtung V des Sicherungsinnengewindeelementes 1 eingedreht, bis der Deformierabschnitt 30 mit dem Innengewinde 4 in Kontakt kommt. Dann wird weiter verschraubt bis die gewünschte Anzahl an deformierten Gewindezahnwindungen 6 geschaffen wurde durch Parallelverschieben der entsprechenden radial inneren Abschnitte 13.

### Bezugszeichen

- 1: Sicherungsinnengewindeelement
- 2: Antrieb
- 3: Ringkragen
- 4: Innengewinde
- 5: Körper
- 6: deformierte (parallel verschobene) Gewindezahnwindungen
- 7: nicht deformierte Gewindezahnwindungen
- 8: (gedachte) Linie
- 9: Sicherungsgewindegangwindungen
- 10: vorderste Sicherungsgewindegangwindung
- 11: hinterste nicht deformierte Gewindezahnwindung
- 12: Normgewindeabschnitt
- 13: radial innere, parallel verschobene Abschnitte der deformierten Gewindezähne
- 14: in der Vorschubrichtung V orientierte Flankenabschnitte, die in der Vorschubrichtung V parallel verschoben sind
- 15: entgegen der Vorschubrichtung V orientierte liankenabschnitte, die in der Vorschubrichtung V parallel verschoben sind
- 16: radial äußere, nicht parallel verschobene Abschnitte der deformierten Gewindezahnwindungen
- 17: unmittelbar radial zu den radial inneren Abschnitten 13 bzw. den parallel verschobenen Gewindezahnwindungen benachbarte nicht deformierte Bereiche des Körpers
- 18: in der axialen Vorschubrichtung V orientierte Flankenabschnitte der radial äußeren, nicht parallel verschobenen Abschnitte der deformierten Gewindezahnwindungen
- 19: entgegen der Vorschubrichtung V orientierte Flankenabschnitte der radial äußeren Abschnitte der nicht parallel verschobenen radial äußeren Abschnitte der deformierten Gewindezahnwindungen
- 20: Gewindeverbindung
- 21: Außengewindeelement
- 22: Außengewinde des Außengewindeelements
- 23: entgegen der Vorschubrichtung V des Sicherungsinnengewindeelementes orientierte Gewindeflanken des Außengewindes des Außengewindeelementes
- 24: in der Vorschubrichtung des Sicherungsinnengewindeelementes orientierte Gewindeflanken der nicht deformierten Gewindezahnwindungen des Normgewindeabschnittes
- 25: entgegen der Vorschubrichtung V des Sicherungsinnengewindeelementes orientierte Gewindeflanken des Außengewindes 22 des Außengewindeelementes 21, die an deformierten Gewindezahnwindungen anliegen
- 26: Deformierwerkzeug
- 27: vorderer Außengewindeabschnitt - hier beispielhaft ein Regelaußengewindeabschnitt
- 28: Zwischenabschnitt
- 29: Deformierabschnitt (=Deformieraußengewindeabschnitt)
- 30: Deformieraußengewinde

- V: axiale Vorschubrichtung des Sicherungsinnengewindeelementes
- D: Aufschraubrotationsrichtung des Sicherungsinnengewindeelementes

- V_{D}: axiale Vorschubrichtung des Deformierwerkzeugs in das Sicherungsinnengewindeelement bei dessen Herstellung

## Patentansprüche

1. Sicherungsinnengewindeelement (1) aus Metall zum Herstellen einer Gewindeverbindung mit einem Außengewindeelement (21) durch Verdrehen des Sicherungsinnengewindeelementes (1) in eine Aufschraubrotationsrichtung (D) relativ zu dem Außengewindeelement (21) und dadurch Verstellen des Sicherungsinnengewindeelementes (1) in eine axiale Vorschubrichtung (V) relativ zu dem Außengewindeelement (21) und/oder durch Verdrehen des Außengewindeelementes (21) relativ zu dem Sicherungsinnengewindeelement (1) und dadurch Verstellen des Außengewindeelementes (21) entgegen der axialen Vorschubrichtung (V) des Sicherungsinnengewindeelementes (1) relativ zu dem Sicherungsgewindelement (1), mit einem, bevorzugt monolithischen, Metall-Körper (5) mit Innengewinde (4) mit mindestens einer von zwei Gewindezahnwindungen begrenzten Sicherungsgewindegangwindung (9, 10), deren Querschnittsprofil im Vergleich zu dem Querschnittsprofil mindestens einer weiteren Gewindegangwindung (7), vorzugsweise im Vergleich zu mehreren weiteren Gewindegangwindungen (7), bevorzugt im Vergleich zu der überwiegenden Anzahl von Gewindegangwindungen (7), zum Erhöhen des Kraftschlusses einer das Sicherungsinnengewindeelement (1) aufweisenden Gewindeverbindung (20) verformt ist,
**dadurch gekennzeichnet,**
**dass** ausschließlich eine der die Sicherungsgewindegangwindung (9,10) begrenzenden Gewindezahnwindungen oder beide die Sicherungsgewindegangwindung (9, 10) auf zwei Axialseiten begrenzenden Gewindezahnwindungen jeweils über ihre gesamte Umfangserstreckung, derart deformiert ist/sind, dass diese ausschließlich in die axiale Vorschubrichtung (V) des Sicherungsinnengewindeelementes (1) relativ zu einem jeweils radial benachbarten Bereich des Körpers (5) verschoben ist/sind, wobei zumindest eine bezogen auf die axiale Vorschubrichtung (V) letzte, insbesondere eine volle Radialerstreckung aufweisende, Gewindezahnwindung (6), bevorzugt zumindest die letzten zwei oder zumindest drei, bevorzugt jeweils eine volle Radialerstreckung aufweisende, Gewindezahnwindungen (6) in der axialen Vorschubrichtung (V) parallel verschoben sind.

2. Sicherungsinnengewindeelement nach Anspruch 1, **dadurch gekennzeichnet,**
**dass** die mindestens eine Sicherungsgewindegangwindung (10) in Umfangsrichtung unmittelbar in eine der nicht deformierten Gewindegangwindung übergeht und/oder dass eine Sicherungsgewindezahnwindung (6) und eine nicht deformierte Gewindezahnwindung (11) unmittelbar axial benachbart sind und/oder in Umfangsrichtung ineinander übergehen.

3. Sicherungsinnengewindeelement nach einem der vorhergehenden Ansprüche,
**dadurch gekennzeichnet,**
**dass** die Summe der beiden Flankenwinkel der mindestens einen durch Parallelverschieben in der axialen Vorschubrichtung (V) deformierten Gewindezahnwindung (6) gleich ist wie Summe der beiden Flankenwinkel der nicht deformierten Gewindezahnwindungen (7) und/oder dass die ein radial innerer Flankenabschnitt der in der axialen Vorschubrichtung (V) orientierten Flanke der mindestens einen deformierten Gewindezahnwindung (6) und/oder der entgegen der axialen Vorschubrichtung (V) orientierten Flanke der mindestens einen deformierten Gewindezahnwindung (6) um ein senkrecht zur Flächenerstreckung des Flankenabschnitts (14, 15) oder der Flanke gemessenen Maß zwischen 0,05 und 0,6mm, vorzugsweise zwischen 0,1 und 0,5mm bevorzugt zwischen 0,2 und 0,4mm, ganz besonders bevorzugt von 0,3mm parallel verschoben ist.

4. Sicherungsinnengewindeelement nach einem der vorhergehenden Ansprüche,
**dadurch gekennzeichnet,**
**dass** die mindestens eine in die axiale Vorschubrichtung (V) deformierte Gewindezahnwindung (6) über ihre gesamte Radialerstreckung in axiale Vorschubrichtung (V) parallel verschoben ist.

5. Sicherungsinnengewindeelement nach einem der Ansprüche 1bis 4,
**dadurch gekennzeichnet,**
**dass** die entgegen der axialen Vorschubrichtung (V) orientierte Gewindeflanke der ausschließlich einen in axiale Vorschubrichtung (V) deformierten Gewindezahnwindung (6) und/oder deren in der axialen Vorschubrichtung (V) orientierte Gewindeflanke bzw. dass die entgegen der axialen Vorschubrichtung (V) orientierten Gewindezahnflanken der in axiale Vorschubrichtung (V) deformierten Gewindezahnwindungen (6) und/oder deren in der axialen Vorschubrichtung (V) orientierte Gewindeflanken jeweils eine Stufe aufweist/aufweisen, vorzugsweise jeweils mit gerundeten Übergängen zwischen den Stufenabschnitten.

6. Sicherungsinnengewindeelement nach einem der vorhergehenden Ansprüche,
**dadurch gekennzeichnet,**
**dass** die nicht deformierten Gewindezahnwindungen (7) und/oder die mindestens eine parallelverschobene Gewindezahnwindung (6) ein Normgewinde, insbesondere ein norm-metrisches Gewinde, insbesondere nach ISO DIN 13 oder ein Norm-Zollgewinde, insbesondere ein Whitworth-Gewinde, bilden.

7. Gewindeverbindung mit einem Sicherungsinnengewindeelement (1) nach einem der vorhergehenden Ansprüche, welches mit einem, vorzugsweise als Norm- bzw. Regelaußengewinde ausgebildeten Außengewinde (22) des Außengewindegewindeelementes (21) verschraubt ist, insbesondere derart, dass die mindestens eine in die axiale Vorschubrichtung (V) parallelverschobene Gewindezahnwindung (6) entgegen der axialen Vorschubrichtung (V) durch Wechselwirkung mit einer Außengewindewindung des Außengewindeelementes (21) elastisch verformt ist und/oder derart, dass sowohl die entgegen der axialen Vorschubrichtung (V) orientierten Gewindeflanken der nicht deformierten Gewindezahnwindungen (7) als auch die in der axialen Vorschubrichtung (V) orientierte Gewindeflanke der mindestens einen deformierten Gewindezahnwindung (6) an jeweils einer gegenüberliegenden Gewindezahnflanke des Außengewindeelementes (21) reibschlüssig anliegen.

8. Verfahren zum Herstellen einer Sicherungsinnengewindeelement (1) nach einem der Ansprüche 1 bis 6,
**dadurch gekennzeichnet,**
**dass** zunächst ein, vorzugsweise gehärteter und/oder monolithischer, Innengewindeelementrohling mit einem in einem Körper (5) ausgebildeten regelmäßigem Innengewinde (4) bereitgestellt und die mindestens eine, die mindestens eine Sicherungsgewindegangwindung (9, 10) begrenzende Gewindezahnwindung (6) über ihre gesamte Umfangserstreckung, in die axiale Vorschubrichtung (V) relativ zu einem jeweils radial benachbarten Bereich des Körpers (5) parallelverschoben wird.

9. Verfahren nach Anspruch 8,
**dadurch gekennzeichnet,**
**dass** das Deformieren durch axiales Kraftbeaufschlagen der mindestens einen parallel zu verschiebenden Gewindezahnwindung, vorzugsweise während einer drehenden Relativbewegung zwischen dem Innengewindeelementrohling und einem Deformierwerkzeug (26) durchgeführt wird.

10. Verfahren nach einem der Ansprüche 8 oder 9,
**dadurch gekennzeichnet,**
**dass** das Deformierwerkzeug (26) mit einem in einer axialen Vorschubrichtung (V_{D}) des Deformierwerkzeugs (26) vorderen, insbesondere als Regelaußengewindeabschnitt (27) ausbildeten Außengewindeabschnitt, in das regelmäßige Innengewinde (4) des Innengewindeelementrohlings durch Verdrehen des Deformierwerkzeugs (26) und/oder des Innengewindeelementrohlings eingeschraubt wird bis ein über einen Zwischenabschnitt (28) axial entgegen der axialen Vorschubrichtung (V_{D}) des Deformierwerkzeugs (26) von dem vorderen Außengewindeabschnitt beabstandeter gegenüber dem vorderen Außengewindeabschnitt einen axialen Steigungsversatz aufweisender Deformierabschnitt (29) axial so weit in das Innengewinde (4) des Innengewindeelementrohlings verschraubt wird, bis mindestens eine Gewindezahnwindung, bevorzugt mehrere axial nebeneinander angeordnete Gewindezahnwindungen des Innengewindeelementrohlings über ihre jeweilige gesamte Umfangserstreckung, parallel verschoben ist/sind.

11. Verfahren nach Anspruch 10,
**dadurch gekennzeichnet,**
**dass** eine axiale Länge des Zwischenabschnittes (28) des Deformierwerkzeugs (26) gleich groß oder größer ist als eine axiale Länge der mindestens einen mittels des Deformierabschnittes (29) deformierten Gewindezahnwindung (6) des mittels des Verfahrens hergestellten Sicherungsinnengewindeelementes (1).

12. Deformierwerkzeug (26) zur Durchführung eines Verfahrens nach einem der Ansprüche 8 bis 11, mit einem in einer axialen Vorschubrichtung (V) des Deformierwerkzeugs (26) vorderen, bevorzugt als Regelaußengewindeabschnitt ausgebildeten Außengewindeabschnitt zum Einschrauben in das regelmäßige Innengewinde (4) des Innengewindeelementrohling in der axialen Vorschubrichtung (V) und mit einem über einen Zwischenabschnitt (28) axial entgegen der Vorschubrichtung (V) des Deformierwerkzeugs (26) von dem Außengewindeabschnitt (27) beabstandeten gegenüber dem vorderen Regelaußengewindeabschnitt (27) einen axialen Steigungsversatz aufweisenden, bevorzugt einen geringeren Außendurchmesser und/oder eine geringere axiale Länge als der vordere Außengewindeabschnitt aufweisender, Deformierabschnitt zum Parallelverschieben mindestens einer Gewindezahnwindung (6), bevorzugt mehrerer axial nebeneinander angeordnete Gewindezahnwindungen des Innengewindeelementrohlings relativ zu einem jeweils radial benachbarten Bereich des Körpers (5), über ihre gesamte Umfangserstreckung.

13. Deformierwerkzeug nach Anspruch 12,
**dadurch gekennzeichnet,**
**dass** der Deformierabschnitt eine der Gewindesteigung des vorderen Außengewindeabschnitts entsprechende Gewindesteigung aufweist und/oder dass der Zwischenabschnitt (28) außengewindefrei ist und/oder einen gegenüber dem vorderen Außengewindeabschnitt und/oder dem Deformierabschnitt reduzierten Außendurchmesser aufweist.

14. Verwendung eines Deformierwerkzeugs (26) nach einem der Ansprüche 12 oder 13 zur Durchführung eines Verfahrens nach einem der Ansprüche 8 bis 11 und/oder zur Herstellung eines Sicherungsinnengewindeelementes (1) nach einem der Ansprüche 1 bis 6.

## Claims

1. An internally threaded locking element (1) made of metal for producing a threaded connection with an externally threaded element (21) by rotating the internally threaded locking element (1) in a screwon rotation direction (D) relative to the externally threaded element (21) and thereby displacing the internally threaded locking element (1) in an axial feed direction (V) relative to the externally threaded element (21) and/or by rotating the externally threaded element (21) relative to the internally threaded locking element (1) and thereby displacing the externally threaded element (21) in a direction opposite to the axial feed direction (V) of the internally threaded locking element (1) relative to the threaded locking element (1), the internally threaded locking element (1) comprising a, preferably monolithic, metal body (5) having an internal thread (5) including at least one locking thread winding (9, 10) limited by two thread tooth windings, the cross-sectional profile of the at least one locking thread winding (9, 10) being deformed compared to the cross-sectional profile of at least one other thread winding (7), preferably compared to several other thread windings (7), more preferably compared to the majority of thread windings (7), in order to increase the frictional connection of a threaded connection (20) having the internally threaded locking element (1),
**characterized in that**
solely one of the thread tooth windings which limit the locking thread winding (9, 10) or both thread tooth windings which limit the locking thread winding (9, 10) on two axial sides is/are deformed over its/their entire circumferential extension in such a manner that said thread tooth winding(s) is/are shifted exclusively in the axial feed direction (V) of the internally threaded locking element (1) relative to a radially adjacent area of the body (5), at least one last thread tooth winding (6) in relation to the axial feed direction (V), which has in particular a complete radial extension, preferably at least the last two or at least three thread tooth windings (6), which preferably each have a complete radial extension, being shifted parallel in the axial feed direction (V).

2. The internally threaded locking element according to claim 1,
**characterized in that**
the at least one locking thread winding (10) merges directly into one of the non-deformed thread windings in the circumferential direction and/or that a locking thread tooth winding (6) and a non-deformed thread tooth winding (11) are directly adjacent to one another in the axial direction and/or merge in the circumferential direction.

3. The internally threaded locking element according to any one of the preceding claims,
**characterized in that**
the sum of the two flank angles of the at least one thread tooth winding (6) deformed by parallel shifting in the axial feed direction (V) is the same as the sum of the two flank angles of the non-deformed thread tooth windings (7) and/or that a radially inner flank section of the flank of the at least one deformed thread tooth winding (6) oriented in the axial feed direction (V) and/or of the flank of the at least one deformed thread tooth winding (6) oriented in the direction opposite to the axial feed direction (V) is shifted parallel by a measure between 0.05 mm and 0.6 mm, preferably between 0.1 mm and 0.5 mm, more preferably between 0.2 mm and 0.4 mm, particularly preferably of 0.3 mm, measured perpendicularly to the surface extension of the flank section (14, 15).

4. The internally threaded locking element according to any one of the preceding claims,
**characterized in that**
the at least one thread tooth winding (6) deformed in the axial feed direction (V) is shifted parallel in the axial feed direction (V) over its entire radial extension.

5. The internally threaded locking element according to any one of claims 1 to 4,
**characterized in that**
the thread flank of the exclusively one thread tooth winding (6) deformed in the axial feed direction (V) which is oriented in the direction opposite to the axial feed direction (V) and/or the thread flank thereof oriented in the axial feed direction (V) or that the thread tooth flanks of the thread tooth windings (6) deformed in the axial feed direction (V) which are oriented in the direction opposite to the axial feed direction (V) and/or the thread flanks thereof oriented in the axial feed direction (V) has/each have a step, which preferably each have rounded transitions between the step sections.

6. The internally threaded locking element according to any one of the preceding claims,
**characterized in that**
the non-deformed thread tooth windings (7) and/or the at least one thread tooth winding (6) shifted parallel form a standard thread, in particular a standard metric thread, in particular according to ISO DIN 13, or a standard inch thread, in particular a Whitworth thread.

7. A threaded connection having an internally threaded locking element (1) according to any one of the preceding claims screwed to an external thread (22), which is preferably realized as a standard or regular external thread, of the externally threaded element (21), in particular in such a manner that the at least one thread tooth winding (6) shifted parallel in the axial feed direction (V) is elastically deformed in the direction opposite to the axial feed direction (V) by interacting with an external thread winding of the externally threaded element (21) and/or in such a manner that both the thread flanks of the non-deformed thread tooth windings (7) oriented in the direction opposite to the axial feed direction (V) and the thread flank of the at least one deformed thread tooth winding (6) oriented in the axial feed direction (V) each contact an opposite thread tooth flank of the externally threaded element (21) in a frictional manner.

8. A method for producing an internally threaded locking element (1) according to any one of claims 1 to 6,
**characterized in that**
first, a, preferably hardened and/or monolithic, internally threaded element blank comprising a regular internal thread (4) realized in a body (5) is provided and the at least one thread tooth winding (6) limiting the at least one locking thread winding (9, 10) is shifted parallel over its entire circumferential extension in the axial feed direction (V) relative to a radially adjacent area of the body (5).

9. The method according to claim 8,
**characterized in that**
the deformation is performed by application of an axial force to the at least one thread tooth winding to be shifted parallel, preferably during a rotating relative movement between the internally threaded element blank and a deformation tool (26).

10. The method according to claim 8 or 9,
**characterized in that**
a front external thread section of the deformation tool (26) in an axial feed direction (V_{D}), which is realized in particular as a regular external thread section (27), is screwed into the regular internal thread (4) of the internally threaded element blank by rotating the deformation tool (26) and/or the internally threaded element blank until a deformation section (29) which is axially spaced apart from the front external thread section in the direction opposite to the axial feed direction (V_{D}) of the deformation tool (26) via an intermediate section (28) and which has an axial pitch offset in relation to the front external thread section is axially screwed into the internal thread (4) of the internally threaded element blank far enough for at least one thread tooth winding, preferably several thread tooth windings disposed adjacent to one another in the axial direction, of the internally threaded element blank is/are shifted parallel over its/their entire circumferential extension.

11. The method according to claim 10,
**characterized in that**
an axial length of the intermediate section (28) of the deformation tool (26) is as long as or longer than an axial length of the at least one thread tooth winding (6) of the internally threaded locking element (1) produced by means of the method which (6) is deformed by means of the deformation tool (26).

12. A deformation tool (26) for performing a method according to any one of claims 8 to 11,
the deformation tool (26) having a front external thread section in an axial feed direction (V) of the deformation tool (26), the external thread section preferably being realized as a regular external thread section (27), for being screwed into the regular internal thread (4) of the internally threaded element blank in the axial feed direction (V), and a deformation section axially spaced apart from the external thread section (27) in the direction opposite to the axial feed direction (V) of the deformation tool (26) via an intermediate section (28) and having an axial pitch offset and preferably having a smaller external diameter and/or a smaller axial length than the front external thread section, the deformation section serving for the parallel shifting of at least one thread tooth winding (6), preferably several thread tooth windings disposed adjacent to one another in the axial direction, of the internally threaded element blank relative to a radially adjacent area of the body (5) over its/their entire circumferential extension.

13. The deformation tool according to claim 12,
**characterized in that**
the deformation section has a thread pitch which corresponds to the thread pitch of the front external thread section and/or that the intermediate section (28) has no external thread and/or has an external diameter reduced in relation to the front external thread section and/or to the deformation section.

14. A use of a deformation tool (26) according to claim 12 or 13 for performing a method according to any one of claims 8 to 11 and/or for producing an internally threaded locking element (1) according to any one of claims 1 to 6.

## Revendications

1. Élément à filetage intérieur de fixation (1) en métal destiné à réaliser un raccord fileté à un élément à filetage extérieur (21) par rotation de l'élément à filetage intérieur de fixation (1) dans une direction de rotation de vissage (D) par rapport à l'élément à filetage extérieur (21) et par conséquent par déplacement de l'élément à filetage intérieur de fixation (1) dans une direction d'avance (V) axiale par rapport à l'élément à filetage extérieur (21) et/ou par rotation de l'élément à filetage extérieur (21) par rapport à l'élément à filetage intérieur de fixation (1) et par conséquent par déplacement de l'élément à filetage extérieur (21) dans une direction opposée à la direction d'avance (V) axiale de l'élément à filetage intérieur de fixation (1) par rapport à l'élément à filetage intérieur de fixation (1), l'élément à filetage intérieur de fixation (1) comprenant un corps métallique (5), de préférence monolithique, ayant un filetage intérieur (4) comportant une spire de filetage de fixation (9, 10) limitée par au moins une de deux spires de filetage denté, le profil de section transversale de la spire de filetage de fixation (9, 10) étant déformé par rapport au profil de section transversale d'au moins une autre spire de filetage (7), de préférence par rapport à plusieurs autres spires de filetage (7), plus préférentiellement par rapport à la plupart des spires de filetage (7), afin de renfoncer la liaison par force d'un raccord fileté (20) ayant l'élément à filetage intérieur de fixation (1),
**caractérisé en ce**
**qu'**une seule des spires de filetage denté qui délimitent la spire de filetage de fixation (9, 10) ou les deux spires de filetage denté qui délimitent la spire de filetage de fixation (9, 10) des deux côtés axiaux est/sont déformée(s) chacune sur leur extension circonférentielle entière de telle manière que la/les spire(s) de filetage denté est/sont déplacée(s) exclusivement dans la direction d'avance (V) axiale de l'élément à filetage intérieur de fixation (1) par rapport à une région du corps (5) adjacente dans la direction radiale, au moins une dernière spire de filetage denté (6) par rapport à la direction d'avance (V) axiale, qui a notamment une extension radiale totale, de préférence au moins les deux dernières ou au moins trois dernières spires de filetage denté (6), qui ont chacune, de préférence, une extension radiale totale, sont déplacées en parallèle dans la direction d'avance (V) axiale.

2. Élément à filetage intérieur de fixation selon la revendication 1,
**caractérisé en ce que**
l'au moins une spire de filetage de fixation (10) est directement suivie d'une spire de filetage non-déformée dans la direction circonférentielle et/ou qu'une spire de filetage dentée de fixation (6) et une spire de filetage denté (11) non-déformée sont directement adjacentes dans la direction axiale et/ou se fondent l'un dans l'autre dans la direction circonférentielle.

3. Élément à filetage intérieur de fixation selon l'une quelconque des revendications précédentes,
**caractérisé en ce que**
la somme des deux angles de flanc de l'au moins une spire de filetage denté (6) déformée par le déplacement parallèle dans la direction d'avance (V) axiale est égale á la somme des deux angles de flanc des spires de filetage denté (7) non-déformées et/ou qu'une partie de flanc radialement intérieure du flanc de l'au moins une spire de filetage denté (6) déformée qui est orienté dans la direction d'avance (V) axiale et/ou du flanc de l'au moins une spire de filetage denté (6) déformée qui est orienté dans la direction opposée à la direction d'avance (V) axiale est déplacé en parallèle d'une mesure entre 0,05 mm et 0,6 mm, de préférence entre 0,1 mm et 0,5 mm, plus préférentiellement entre 0,2 mm et 0,4 mm, particulièrement préférée de 0,3 mm, mesurée perpendiculairement à l'extension de surface de la partie de flanc (14, 15) ou du flanc.

4. Élément à filetage intérieur de fixation selon l'une quelconque des revendications précédentes,
**caractérisé en ce que**
l'au moins une spire de filetage denté (6) déformée dans la direction d'avance (V) axiale est déplacée parallèlement dans la direction d'avance (V) axiale sur son extension radiale entière.

5. Élément à filetage intérieur de fixation selon l'une quelconque des revendications 1 à 4,
**caractérisé en ce que**
le flanc de filetage de l'une seule spire de filetage denté (6) déformée dans la direction d'avance (V) axiale qui est orienté dans la direction opposée à la direction d'avance (V) axiale et/ou le flanc de filetage de celle-ci qui est orienté dans la direction d'avance (V) axiale ou que les flancs de filetage denté des spires de filetage denté (6) déformées dans la direction d'avance (V) axiale qui sont orientés dans la direction opposée à la direction d'avance (V) axiale et/ou les flancs de filetage de celles-ci qui sont orientés dans la direction d'avance (V) axiale a/ont chacun un échelon qui a, de préférence, des passages arrondis entre les parties d'échelon.

6. Élément à filetage intérieur de fixation selon l'une quelconque des revendications précédentes,
**caractérisé en ce que**
les spires de filetage denté (7) non-déformées et/ou l'au moins une spire de filetage denté (6) déplacée en parallèle réalisent un filetage normalisé, notamment un filetage métrique normalisé, notamment selon ISO DIN 13, ou un filetage en pouces normalisé, notamment un filetage Whitworth.

7. Raccord fileté ayant un élément à filetage intérieur de fixation (1) selon l'une quelconque des revendications précédentes, l'élément à filetage intérieur de fixation (1) étant vissé à un filetage extérieur (22), qui est de préférence réalisé comme filetage extérieur normalisé ou standardisé, de l'élément à filetage extérieur (21), notamment de telle manière que l'au moins une spire de filetage denté (6) déplacée en parallèle dans la direction d'avance (V) est déformée de manière élastique dans la direction opposée à la direction d'avance (V) axiale par l'interaction avec une spire de filetage extérieur de l'élément à filetage extérieur (21) et/ou de telle manière que les flancs de filetage des spires de filetage denté (7) non-déformées qui sont orientés dans la direction opposée à la direction d'avance (V) axiale et le flanc de filetage de l'au moins une spire de filetage denté (6) déformée qui est orienté dans la direction d'avance (V) axiale contactent chacun un flanc de filetage denté opposé de l'élément à filetage extérieur (21) par friction.

8. Procédé de fabrication d'un élément à filetage intérieur de fixation (1) selon l'une quelconque des revendications 1 à 6,
**caractérisé en ce**
**qu'**une brute d'élément à filetage intérieur, de préférence durcie et/ou monolithique, comprenant un filetage intérieur (4) régulier réalisé dans un corps (5) est fournie et l'au moins une spire de filetage denté (6) délimitant l'au moins une spire de filetage de fixation (9, 10) est déplacée en parallèle sur son extension circonférentielle entière dans la direction d'avance (V) axiale par rapport à une région du corps (5) qui est adjacente dans la direction radiale.

9. Procédé selon la revendication 8,
**caractérisé en ce que**
la déformation est réalisée par l'application d'une force axiale à l'au moins une spire de filetage denté à déplacer en parallèle, de préférence pendant un déplacement relatif rotatif entre la brute d'élément à filetage intérieur et un outil de déformation (26).

10. Procédé selon la revendication 8 ou la revendication 9,
**caractérisé en ce**
**qu'**une partie de filetage extérieur avant dans une direction d'avance (V_{D}) axiale de l'outil de déformation (26), qui est notamment réalisée comme partie de filetage extérieur normal (27) de l'outil de déformation (26), est vissée dans le filetage intérieur (4) régulier de la brute d'élément à filetage intérieur par rotation de l'outil de déformation (26) et/ou de la brute d'élément à filetage intérieur jusqu'à ce qu'une partie de déformation (29) qui est espacée de la partie de filetage extérieur avant dans la direction axiale opposée à la direction d'avance (V_{D}) axiale de l'outil de déformation (26) par une partie intermédiaire (28) et qui a un décalage de pas axial par rapport à la partie de filetage extérieur avant soit vissée dans le filetage intérieur (4) de la brute d'élément à filetage intérieur dans la direction axiale jusqu'à ce qu'au moins une spire de filetage denté, de préférence plusieurs spires de filetage denté disposées l'une à côté de l'autre dans la direction axiale, de la brute d'élément à filetage intérieur soit/soient déplacée(s) en parallèle sur leur extension circonférentielle entière respective.

11. Procédé selon la revendication 10,
**caractérisé en ce**
**qu'**une longueur axiale de la partie intermédiaire (28) de l'outil de déformation (26) est égale ou supérieure à une longueur axiale de l'au moins une spire de filetage denté (6) de l'élément à filetage intérieur de fixation (1) fabriqué au moyen du procédé qui est déformée au moyen de la partie de déformation (29).

12. Outil de déformation (26) destiné à réaliser un procédé selon l'une quelconque des revendications 8 à 11,
l'outil de déformation (26) comprenant une partie de filetage extérieur avant dans la direction d'avance (V) axiale de l'outil de déformation (26), qui est de préférence réalisée comme partie de filetage extérieur normal (27), pour le vissage dans le filetage intérieur (4) régulier de la brute d'élément à filetage intérieur et comprenant une partie de déformation qui est espacée de la partie de filetage extérieur (27) dans la direction axiale opposée à la direction d'avance (V) de l'outil de déformation (26) par une partie intermédiaire (28) et qui a un décalage de pas axial par rapport à la partie de filetage extérieur avant (27) et qui a de préférence un diamètre extérieur inférieur et/ou une longueur axiale inférieure à celui/celle de la partie de filetage extérieur avant et qui est destinée au déplacement parallèle d'au moins une spire de filetage denté (6), de préférence de plusieurs spires de filetage denté disposées l'une à côté de l'autre dans la direction axiale, de la brute d'élément à filetage intérieur par rapport à une région du corps (5) adjacente dans la direction radiale sur son/leur extension circonférentielle entière.

13. Outil de déformation selon la revendication 12,
**caractérisé en ce que**
la partie de déformation a un pas de filetage qui correspond au pas de filetage de la partie de filetage extérieur avant et/ou que la partie intermédiaire (28) n'a aucun filetage extérieur et/ou a un diamètre extérieur réduit par rapport à la partie avant de filetage extérieur avant et/ou par rapport à la partie de déformation.

14. Utilisation d'un outil de déformation (26) selon la revendication 12 ou la revendication 13 pour réaliser un procédé selon l'une quelconque des revendications 8 à 11 et/ou pour fabriquer un élément à filetage intérieur de fixation (1) selon l'une quelconque des revendications 1 à 6.
